# EUROPEAN PATENT SPECIFICATION

(11) **EP 1 938 577 B1**
(45) Date of publication and mention of the grant of the patent: **14.08.2013**
(21) Application number: 05799485.7
(22) Date of filing: 21.10.2005
(51) Int. Cl.: H04N 5/353

(54) **A METHOD AND A DEVICE FOR REDUCING MOTION DISTORTION IN DIGITAL IMAGING**
VERFAHREN UND EINRICHTUNG ZUR VERRINGERUNG VON BEWEGUNGSVERZERRUNGEN BEI DER DIGITALEN BILDGEBUNG
PROCEDE ET DISPOSITIF DESTINES A REDUIRE UNE DISTORSION DE MOUVEMENT EN IMAGERIE NUMERIQUE

(43) Date of publication of application: 02.07.2008
(73) Proprietor: Nokia Corporation, 02150 Espoo (FI)
(72) Inventor: KALEVO, Ossi, FI-37800 Toijala (FI); ALAKARHU, Juha, FI-33820 Tampere (FI); KAIKUMAA, Timo, FI-33820 Tampere (FI)
(74) Representative: Berggren Oy Ab
(86) International application number: PCT/FI2005/050369
(87) International publication number: WO 2007/045714

(56) References cited:
- EP-A1- 1 473 931
- US-A1- 2003 035 059
- US-A1- 2005 224 713
- US-A1- 2006 033 966
- WILBURN B. ET AL.: 'High-Speed Videography Using a Dense Camera Array' PROCEEDINGS OF THE 2004 IEEE CONFERENCE ON COMPUTER VISION AND PATTERN RECOGNITION 27 June 2004 - 02 July 2004, XP010708595

## Description

The present invention generally relates to cameras and image acquisition. Especially the invention concerns digital cameras equipped with a CMOS (complementary metal oxide semiconductor) sensor and a rolling shutter mechanism.

The current trend in photography drives the evolution strongly towards digital imaging and respectively, traditional film cameras continuously lose their market share. One driving force of this phenomenon traces back to the recent rapid development of digital cameras due to the attained improvements in size, weight, and maximum achievable picture quality thereof. Moreover, resulting digital images can be cleverly stored in small-sized, affordable and relatively large capacity memory cards, and further, they can be easily moved between different electronic appliances such as desktop/laptop computers, PDAs (Personal Digital Assistant), mobile terminals, and printing devices. Together with, or should we say, despite of all the above features and gained benefits therefrom the modern camera apparatuses have still remained affordable due to the competition between camera manufacturers, increasing production volumes and electronics with falling prices.

Digital sensors or "chips" (hereafter also an "image sensor" or mere "sensor" in contrast to e.g. a movement sensor) as they are often called are used in modern cameras for exposing the images and generating the corresponding digital data. Such sensors are typically of a CMOS or a CCD (charge coupled device) type. CCD devices may utilize e.g. a global shutter, wherein an entire image consisting of a number of small image elements called pixels, or a single "frame" in the case of a video capture, is exposed at once after a common image element reset and then read out for editing/storage.

Many CMOS cameras still incorporate a rolling shutter type mechanism that reminds of the curtain shutter in classic film cameras. The image rows, i.e. scan lines, are sequentially exposed and read out as a continuous process. The topmost line of an image sensor is often exposed earlier than the second line which is again exposed a bit earlier than the third line and so on, thus making it possible to read out the contents of the whole sensor so that the exposure time of individual lines is constant even though the information from all of the lines cannot be read at the same time. Therefore the different lines do not represent the same time instant and the rolling shutter does not perform very well in relation to rapidly moving objects (or a moving camera). The resulting images can be jagged and/or blurred as to the details thereof. Publication [1] discloses a method for modeling rolling-shutter cameras and discusses about their performance especially in motion tracking use. Yet, a compensation arrangement for motion-introduced error is presented.

In certain applications the global shutter thus outperforms the rolling shutter. The reasons why one should nevertheless continue developing enhanced rolling shutter type solutions are still there; first, the rolling shutter is superior to the global shutter when the overall image acquisition rate is maximised. The synchronized exposure mechanism of the global shutters, while producing a focused fast-motion shot, is not suitable for high-rate (multiple) image/frame capturing use as the exposure/integration procedure covering all the pixels is started and stopped simultaneously and it's not possible to continue imaging for the remaining lines while reading the first one(s). Further, as standard CMOS chips cannot typically hold and store intensities for long, using a global shutter would often require the usage of a CCD sensor. Moving into a CCD sensor is not the most preferable situation in many applications however as the CMOS sensors are generally cheaper and consume less power, these both aspects admittedly having a great effect on the final usability and price of the end product, and thereby also clearly affecting the attractiveness of the product in the eyes of the price-conscious customers. Versatile multi-purpose products such as mobile phones represent an example of a product range where an imaging circuit cannot be given a similar weight as in dedicated cameras.

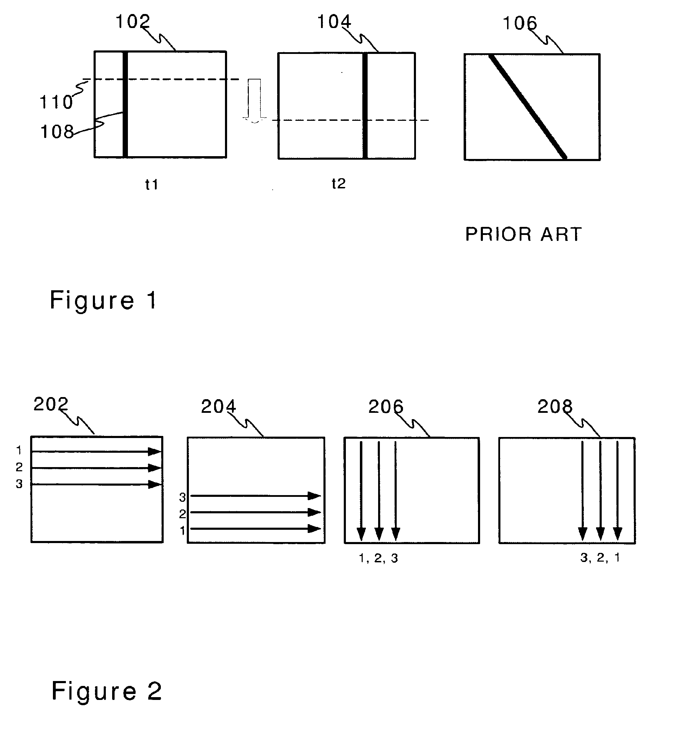

The motion problem associated with the classic rolling shutter type mechanism is further illustrated in a simplified example of figure 1. The leftmost screen 102 represents an image (sensor) area on first time instant t1 during which the rolling shutter is exposing a sub-area comprising a plurality of scan lines and reading out the topmost line of the sub-area marked as dotted 110 in the figure. For example, if a read-out time for a single line is 1/(30*1200) seconds and the exposure time for the image elements shall be 1/6000 seconds, six sequential scan lines forming a sub-area will be exposed simultaneously. At the time of the next illustrated instant t2, see the middlemost screen 104, the exposure area is located considerably lower as the scan direction (depicted with an arrow) is from top to bottom. Considering a vertical bar 108 continuously moving during the overall exposure procedure of a single image from left to right in the view of the sensor, the resulting aggregate image can be seen in screen 106. As the upper parts of the bar were captured earlier than the lower parts, and because this phenomenon was carried out as a continuous process, the bar seems to stand out slant in the final image. If the image contained a plurality of moving objects each having a different distance to the camera, the distortion would be most notable in the closest object; the angular speed (sensor vs. object) is bigger when the object is nearer to the camera.

One mainly theoretical solution to the aforesaid problem is the manual rotation of the camera, but then the user has to know the scan direction of the camera and even then the whole sensor area cannot be exploited if the camera is e.g. in portrait mode and a landscape image should be captured instead. In addition, such manual rotation is in the long run an annoying experience to the user who longs for a simple and convenient image shoot procedure.

Publication EP1473931A1 discloses a method and a device for video imaging. The proposed solution utilizes, for example, interpolation between several subsequent rolling frames (acquired with a rolling shutter) in order to create a single desired frame with time-aligned components. Motion data between rolling frames is determined and used in forming desired frames.

As become evident on the basis of the above introduction, some applications still benefit from using CMOS sensors and rolling shutters while their defects were also clearly addressed. The major problem relates to a weak performance in fast-motion imaging meaning either the camera or the camera target is moving fast in relation to the read-out rate of the image.

The object of the invention is to reduce motion-introduced distortion in the images obtained by using a rolling shutter type mechanism. The object is achieved by a solution where movement(s) in the view of the sensor is first monitored, and when detected, configured to affect the selection of the scan direction (read out direction) of the sensor. The movement of the camera apparatus itself and/or object(s) in the view of the sensor may both cause said monitored movement at least in a portion of the sensor view. Thus e.g. movement sensors (motion sensors) can be used to track camera movements to detect inevitably originated movement in the image sensor view instead of or in addition to direct digital image analysis techniques. Further, as an alternative or a supplementary feature, the image sensor can be actually physically rotated so as to change the relative scan direction of the sensor from the standpoint of the rest of the camera apparatus and ultimately, the object(s) in the target image.

In an aspect of the invention a method for reducing motion-introduced distortion in a digital image comprising the steps of obtaining the image by a camera mechanism incorporating a sensor with a rolling type shutter sequentially exposing the scan lines at different time instants and detecting movement of at least a portion in the image in the view of the sensor, is characterized in that it also comprises the preparatory step of
- adjusting the scan direction of said scan lines of the sensor in relation to the rest of the camera mechanism based on the detected movement, wherein said adjustment means is configured to, whenever the detected movement occurs horizontally in the view, to select the scan direction as horizontal; whereas in case the movement occurs vertically, the selected scan direction is vertical.

In another aspect an electronic device for obtaining a digital image, said device comprising a body and a camera mechanism stably attached to the body, said mechanism incorporating a sensor with a rolling type shutter configured to sequentially expose the scan lines at different time instants, and detection means for recognizing movement of at least a portion in the image in the view of the sensor, is characterized in that it further comprises
- adjustment means for selecting the scan direction of said scan lines the sensor in relation to the body of the electronic device based on the movement, wherein said adjustment means is configured to, whenever the detected movement occurs horizontally in the view, to select the scan direction as horizontal; whereas in case the movement occurs vertically, the selected scan direction is vertical.

One feasible way to adjust the scan direction in order to reduce the bending effect in the resulting image is to follow the movement direction. As a consequence, the moving objects would look a bit thicker than they actually are in the resulting image. Other options for adjustment are presented in the detailed description following hereinafter.

The utility of the invention depends on several factors. As the most evident one, the effect that makes a moving object to become slanted in the image taken with a sensor having a rolling shutter is at least reduced if not completely avoided.

The proposed solution may be run automatically whenever taking photos and it does not require input or guidance from the user like awkward manual rotation of the camera. Moreover, the invention is somewhat simple to implement as control logic, e.g. software to be executed by a processing unit, or hardware elements like different detectors and sensors that are already available for other applications can be utilized. Additional computations may also be kept on a moderate level depending on the available resources.

In one embodiment of the invention three images showing mainly a fence are taken through a side window of a moving car rolling into a certain direction. One of the images does not exploit the method of the invention at all whereas the remaining two utilize it with different parameters. The results are analysed and the scenario is expanded as to the number of degrees of freedom in the movement and the preferred scan direction.

In the following, the invention is described in more detail by reference to the attached drawings, wherein
Fig. 1 illustrates the prior art scenario in which a rolling shutter introduces motion distortion into an image disclosing a moving bar.
Fig. 2 visualizes different scan directions of the sensor of the invention.
Fig. 3 discloses an image taken from a rolling car without any corrective actions.
Fig. 4 discloses an image as in figure 3 now with the method of the invention applied.
Fig. 5 discloses an image as in figures 3 and 4 with the method of the invention alternatively applied.
Fig. 6 is a flow diagram of one option for carrying out the method of the invention.
Fig. 7 is a block diagram of an electronic device adapted to execute the method of the invention.

Figure 1 was already reviewed in conjunction with the description of related prior art.

Figure 2 visualizes how the sensor may utilize different scan directions. Instead of always reading the topmost line first and bottommost line last, see reference numeral 202 and running numbers 1,2,3 indicating the scan direction in this basic case, it should also be possible to read out the sensor a column (vertical line) by column so that the leftmost column is examined first, followed by the column next to it, see numeral 206. Furthermore, it would be beneficial to also have a possibility for reading out the information in reverse order, from bottommost to topmost line 204, or from rightmost column to leftmost column 208. Arrow directions do not play a major role in the figure, i.e. reading data relating to image elements within a scan line (either horizontal or vertical) can be handled as preferred depending on the used sensor.

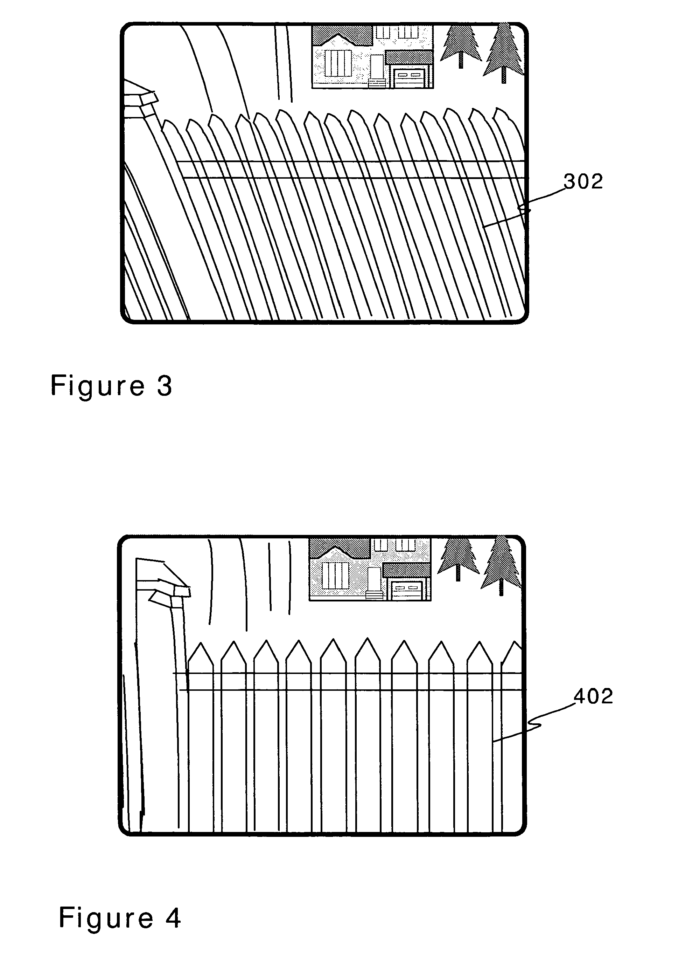

Next, in order to illuminate the feasibility of the invention in real-life situation a scenario, which may occasionally take place to many professional or hobby photographers, is presented by figures 3, 4, and 5. These figures are only exemplary and have been constructed to depict the fulcrum of the invention, i.e. they should not be considered as fully realistic as to their details such as the scales of various objects.

Let us assume that our exemplary photographer carrying a camera apparatus is travelling in a peacefully moving car or other vehicle. After a while, he sees an interesting countryside view including a wooden fence, and trees/plants and a house behind it and wants to memorialise it on the fly as it is not always possible to stop the vehicle for a photographing break; this could easily happen e.g. on a motorway or while utilizing public transportation. The photographer then focuses the camera towards the roadside and takes the photo. The result has been sketched in figure 3. The fence that is the closest element in the view contains straight boards that are perpendicular to the ground surface and the camera. However, in the formed digital image the fence looks slant. This is due to the fact that as the lines of the image were not read out simultaneously but the bottommost lines were read later than the topmost ones the horizontal movement of the car from right to left in relation to the image objects causes the lower parts of the fence to twist in relation to the upper parts. Please refer to portion numbered as 302 in figure 3 for effortless visual recognition of the distortion. The fence is more slanted than the objects situated farther away from the camera due to the respectively higher angular speed thereof in relation to the camera. It's obvious that such curved shape of boards in the stored image does not look natural to the viewer of the image and he/she will probably see it as annoying interference that at least partly spoils the overall viewing experience.

In the case of figure 4, the method and/or device of the invention is applied in a similar scenario. Again, the photo is taken from a moving vehicle so that the scan lines are not read out simultaneously and do not thus represent exactly the same time instant. In contrast to the previous example, the camera is this time equipped with a sensor that can read the scan lines in selectable direction.

One optional feature of the invention is that especially motion estimation is used to obtain information about the movements in the view of the image sensor and based on that, a number of parameter values such as a read out direction is chosen in order to minimise the undesired effect shown in the example image of figure 3. In a typical camera application, a viewfinder or a corresponding display is used before taking an image, so motion estimation calculations can be based on the monitoring of the successive (digitalized) viewfinder images. It is possible to authorize the user of the camera to change settings defining the frame rate for automatic image analysis and motion estimation e.g. whenever a predefined mode is selected in the camera for reduced motion distortion. Images that are used solely for calculating motion estimates do not have to be stored permanently to the memory chip or removable memory card of the camera like the normal photographs as the frames/images necessary for performing the motion estimation algorithm, possibly hardware-accelerated one, can be stored just temporarily e.g. in a circular buffer as a continuous stream.

It is also applicable to use movement sensor(s) to detect the camera movements that similarly cause portions to move in the image sensor view. This kind of solution will work nicely when the camera is moving and the object(s) is stationary. A movement sensor such as an accelerometer, a gyroscope, or a manometer will nicely reduce further processing requirements and potentially also add accuracy to the movement detection process. Traditional movement sensors attached to the camera do not work whenever the camera stays stationary and object(s) is only moving in the image sensor view. Wireless movement sensors (e.g. infrared) detecting external action could even be utilized for that purpose if calibrated properly to follow the image sensor's visual field.

We shall now primarily consider the case where image data analysis based motion estimation is used for read out direction determination but also cases where a dedicated movement sensor is to be applied alone or together with motion estimation algorithms are fully feasible as to be disclosed later.

As the car moves from the standpoint of the camera view from right to left and thus the portions and objects in the image seem to move rightwards, the read out direction should be selected as "left to right" or vice versa. In other terms the read out direction shall advantageously be either parallel or opposite to the movement in the image. In figure 4 the read out direction applied by the sensor was from left to right and the fence boards 402 seem to stand rather horizontally compared with the ones of figure 3. The fence appears a bit thicker than the original one though, this being another noticeable effect of the adaptive read out direction selection.

Generally speaking the above procedure starts when the camera is operated in such a mode where an image stream (several substantially subsequent images, rate optionally user-definable) is available for analysis. Motion estimation can be then carried out between successive image frames using e.g. a dedicated hardware accelerator or software algorithms and a conclusion is made whether there is movement in the scenery and if yes, are the objects mainly moving downwards (case A), upwards (case B), rightwards (case C) or leftwards (case D) in relation to the camera/sensor itself. Relative movement of the objects can be also detected utilizing movement sensors that may be capable of monitoring only the camera movements, or sensors additionally/solely able to (wirelessly) monitor external objects' movements may be respectively available.

According to the above, the read out direction is chosen so as to minimise the motion distortion in the image objects. For this purpose, two main possibilities exist:
**Possibility 1:**
   Case A : Read out direction Top-to-Bottom
   Case B : Read out direction Bottom-to-Top
   Case C : Read out direction Left-to-Right
   Case D : Read out direction Right-to-Left
**Possibility 2:**
   Case A : Read out direction Bottom-to-Top
   Case B : Read out direction Top-to-Bottom
   Case C : Read out direction Right-to-Left
   Case D : Read out direction Left-to-Right

In Possibility 1 the moving objects appear somewhat thicker than what they naturally are, whereas in Possibility 2 the objects appear thinner than originally. However, as the straight lines remain straight, the result is typically more appealing towards human viewers than the example image of figure 3.

It is up to practical experiments whether people on average prefer the thinner or thicker objects more, and such selection should anyhow advantageously remain user-definable by a software parameter of the camera application etc. It is still important to notice that after either the factory default or user-defined selection the camera automatically proceeds with the operation in correct mode.

In case the only requirement is that no slanted images appear, only two read out directions (one in horizontal direction and one in vertical direction) are needed. Then, the objects will randomly appear either thicker or thinner depending on the direction of their movement in the sensor view.

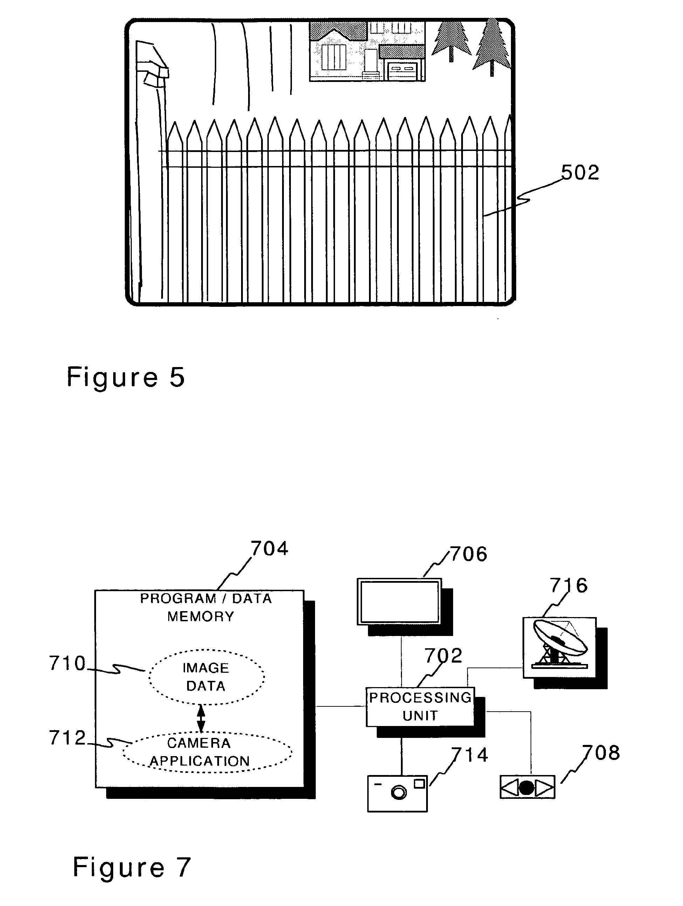

Figure 5 visualizes the method of the invention with an alternative read out direction, Right-to-Left. The fence stays straight but boards 502 look narrower than originally. This phenomenon is in line with the previous discussion; as the read out direction is opposite to the movement of the fence in the image view, "samples" (scan lines) are read from the fence, which is the closest object to the camera/sensor and thus bears the highest angular velocity and would suffer visually most from the motion distortion, with a reduced frequency compared to the traditional horizontal scanning or a vertical scan from left to right.

Real-life scenarios sometimes encompass objects that do not move axis vise from the camera sensor's and scan axes' standpoint, i.e. the movement is more or less diagonal. The same logic applies to situations where the camera moves correspondingly. Thus even a sensor with an adjustable read out direction (horizontal or vertical) cannot completely eliminate motion distortion introduced to the image. In these cases one option is to determine the main axis, e.g. the axis in relation to which the relative velocity is highest (e.g. highest magnitude), and base the selection of the read out direction to that.

Another option would require implementing a mechanically rotatable sensor arrangement wherein the detected diagonal movement affects the rotation angle of the sensor in relation to the (rest of the camera) mechanism/camera housing and thus also image object(s). Even originally non-axis aligned, diagonal movement could be compensated by such arrangement. It's therefore possible to first "fine tune" the diagonal movement into axis vise movement via sensor rotation and then select the (vertical/horizontal) scan direction internally in the sensor for the final correction, or the other way around.

An alternative approach relates to adjusting the scan direction of a sensor purely in relation to the rest of the camera mechanism/apparatus and ultimately also the image object(s), i.e. the internal scan direction of the sensor can be kept fixed whereas the sensor rotates in relation to the rest of the camera internals/housing and the image object(s).

It's obvious that the above-described sensor-rotation based solutions in many cases provide digital images the alignment of which (the same effect that often takes place when the camera is unintentionally held on a slant while taking the picture) is not preferred by the photographer. Therefore the image shall be advantageously automatically rotated to a direction compensating the changed image alignment via software means and further electronically "cut" to the final (typically rectangular) form with preferred dimensions, if necessary. These approaches are feasible whenever the sensor size (image area) is large enough to capture the required additional information at the border areas so that the dimensions of the digital image remain suitable even after the rotational correction and border cuts introduced by the software.

Further, the camera view may contain a plurality of portions like various objects that move in different directions. Then the estimated velocity and/or size (also predicting the distance) of the objects, e.g. a "main" object is determined, may be used for read out direction decision-making.

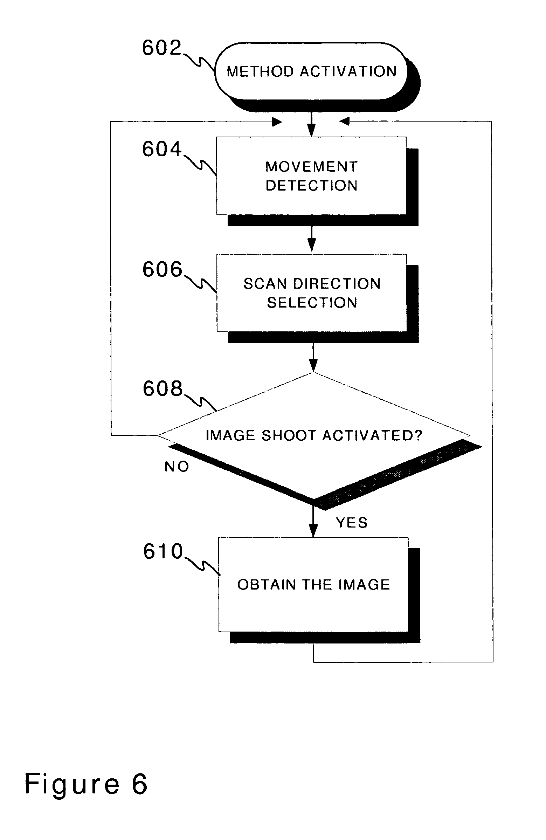

Flow diagram of figure 6 discloses one step-by-step option from many for carrying out the method of the invention. During method activation 602 either the user of the executing device, e.g. a digital camera, manually triggers the execution of the movement analysis and subsequent scan direction determination or the device itself initiates it based on user-defined or factory default indicative parameter value and e.g. relating application, for example a camera application, launch. Manual triggering may occur through a software function etc. In addition, the camera application may include automatic movement detection algorithm that monitors various associated parameter values and switches the variable scan direction process on if needed. In step 604 motion analysis is performed to detect movement in the sensor view. This refers to the direct recognition of portion movement(s) in the view of the camera sensor or to the movement of the device itself; camera movement also induces movement in the image sensor view and is therefore equally applicable detection basis if the image portions (e.g. objects) remain static. Analysis utilizing the (image) sensor may refer to e.g. different pattern recognition and motion tracking algorithms determining the necessary parameters straight from the available digital image data. Movement of the camera or external objects (preferably in the view of the camera's image sensor to have any effect on the motion distortion of the image) may, on the other hand, be recognized through dedicated movement sensors (either fixedly or detachably but still firmly attached to the camera) as previously mentioned.

Results provided by step 604 are funnelled to step 606 wherein the scan direction (read out direction) of the sensor is selected. The sensor may, for example, include a data input interface whereto a simple control voltage or a more complex message including a parameter indicating the preferred scan direction can be transmitted by the processing unit of the device controlled by a camera application. Otherwise, the determination of a proper scan direction has been presented rather extensively already hereinbefore. In step 608 it is checked whether an image (to be stored) shall be taken. Such check may refer to the recognition of an established electrical contact within the camera electronics caused by a button press by the user or to an altered software parameter value, for example. Additionally, different timers may activate the actual image shoot process. In video capture mode either every captured image (shot either in a timed manner for constant frame rate or continuously with a maximum effort principle) may end up as a frame in the stored video sequence or some of the images may be used solely for the motion estimation between the video frames. It is obvious to a person skilled in the art that e.g. step 608 can be relocated and one potential location could reside between current steps 602 and 604 in which case the whole process including motion analysis would be started just after receiving the image shoot command from the user or a timer. In step 610 the image is finally obtained with a scan phase utilizing the adjusted scan direction.

Figure 7 shows a block diagram of an electronic device such as a digital camera, a PDA (Personal Digital Assistant), or a (mobile) terminal adapted to execute the method of the invention. The device housing (∼body) includes processing means 702 typically in a form of a processor, a programmable logic chip, a DSP, a microcontroller, etc to carry out the method steps as set down by the circuit structure itself or camera application 712 stored in memory 704. Memory 704, e.g. one or more memory chips, a memory card, or a magnetic disk, further comprises space 710 to accommodate e.g. independent images and video data. It's also possible that the memory comprising the images is separate (e.g. a memory card inserted in the executing device) from the memory comprising application 712 logic. Control input means 708, by which it is referred to the actual control means in hands of the user or just appropriate interfacing means, may include a mouse, a keyboard, a keypad, separate buttons, a track ball, a pen, a pressure sensitive touch pad/screen, optical and/or capacitive sensors, etc. Display means 706 refers to a display (crt, tft, lcd, etc.), different projection means like a data projector, and/or just a viewfinder needed for targeting the camera and the sensor thereof. Display means 706 may further refer to means for interfacing/controlling the display device that is not included in the device as such. Yet, display means 706 may refer to additional software that is necessary for controlling data visualization in accordance with the invention. A camera (mechanism) 714 through which the photo images can be captured includes the sensor and also necessary support/connection structure establishing an attachment of the sensor to the above-mentioned housing that, in the case of a physically rotatable sensor, may also act as a rotation frame for the sensor. With the rotatable sensor, means for actually rotating the sensor in the frame is also required e.g. in a form of an electric motor. Camera mechanism 714 is stably attached to the device as an internal or a detachable module 714, or a number of separate modules. Movement sensor 716 may be used alone or together with image analysis based motion estimation/detection logic included in camera 714 and/or memory 704, 712. The presence of at least one motion-tracking feature is required in the device and the rest are then optional, usability thereof certainly depending on the application.

In addition to data elements also the code for application 712, generally called a computer program, to carry out the method steps of the invention may be provided to the executing device on a separate carrier medium such as a memory card, a magnetic disk, a cd-rom, etc.

The scope of the invention is found in the following claims. Although a few more or less focused examples were given in the text about the invention's applicability and feasible implementation, purpose thereof was not to restrict the usage area of the actual gist of the invention to any certain occasion, which should be evident to skilled readers.

### References:

[1] Cristopher Geyer, Marci Meingast, Shankar Sastry, "Geometric models of Rolling-Shutter Cameras", EECS Department, University of California, Berkeley

## Claims

1. A method for reducing motion-introduced distortion in a digital image comprising the steps of obtaining the image by a camera mechanism incorporating a sensor with a rolling type shutter sequentially exposing the scan lines at different time instants (608, 610), and detecting movement of at least a portion in the image in the view of the sensor (604), **characterized in that** it also comprises the preparatory step of
- adjusting the scan direction of said scan lines of the sensor in relation to the rest of the camera mechanism based on the detected movement (606), wherein whenever the detected movement occurs horizontally in the view, also the selected scan direction is horizontal; whereas in case the movement occurs vertically, the selected scan direction is vertical.

2. The method of claim 1, wherein the internal scan direction of the sensor is configurable.

3. The method of claim 1 or 2, wherein the scan direction of the sensor in relation to the camera mechanism is adjusted by rotating the sensor.

4. The method of any of claims 1-3, wherein said movement is detected via motion estimation from digital image data.

5. The method of any of claims 1-4, wherein said movement is detected via a movement sensor monitoring at least one of the following: movements of the camera mechanism, movements of the device hosting the camera mechanism, or movements of objects showing in the view of the sensor.

6. The method of any of claims 1-5, wherein the scan direction is selectable from at least two options, said options including at least one vertical and one horizontal scan direction.

7. The method of any of claims 1-6, where the scan direction is one of the following: from left to right, from right to left, from top to bottom, or from bottom to top.

8. The method of any of claims 1-7, wherein a main axis, being either a vertical or a horizontal one, is determined for the movement in relation to said sensor of the camera mechanism in order to adjust said scan direction parallel to said main axis, said main axis preferably comprising the highest magnitude velocity component of the movement.

9. The method of any of claims 1-8, wherein in the case of multiple portions moving in different directions in the view, a main portion is determined for scan direction adjustment based on at least one of the following: estimated size, velocity, position, or sensor distance of the portions.

10. The method of claim 5, wherein said movement sensor includes at least one of the following: an accelerometer, a wireless sensor for external objects' tracking, a gyroscope, or a manometer.

11. The method of any preceding claim, wherein said image represents a frame of a video signal.

12. An electronic device for obtaining a digital image, said device comprising a body and a camera mechanism (714) stably attached to the body, said camera mechanism (714) incorporating a sensor with a rolling type shutter configured to sequentially expose the scan lines at different time instants, and detection means for recognizing movement of at least a portion in the image in the view of the sensor (712, 714, 716), **characterized in that** it further comprises
- adjustment means for selecting the scan direction of said scan lines of the sensor in relation to the body of the electronic device based on the movement (702, 712, 714), wherein said adjustment means is configured to, whenever the detected movement occurs horizontally in the view, to select the scan direction as horizontal; whereas in case the movement occurs vertically, the selected scan direction is vertical.

13. The electronic device of claim 12, wherein the internal scan direction of the sensor is configurable.

14. The electronic device of claim 12 or 13, wherein said sensor is rotatable in relation to the body so as to adjust the relative scan direction.

15. The electronic device of any of claims 12-14, wherein said sensor supports both vertical and horizontal scan directions.

16. The electronic device of any of claims 12-15, wherein said detection means is configured to analyse digital image data for motion estimation purposes.

17. The electronic device of any of claims 12-16, wherein said detection means comprises a movement sensor (716).

18. The electronic device of claim 17, wherein said movement sensor (716) comprises at least one of the following: an accelerometer, a wireless sensor for external objects' tracking, a gyroscope, or a manometer.

19. The electronic device of any of claims 12-18, wherein the scan direction is one of the following: from left to right, from right to left, from top to bottom, or from bottom to top.

20. The electronic device of any of claims 12-19, wherein said adjustment means is configured to determine a main axis, being either a vertical or a horizontal one, for the movement in relation to the sensor of the camera mechanism in order to adjust said scan direction parallel to said main axis, said main axis preferably comprising the highest magnitude velocity component of the movement.

21. The electronic device of any of claims 12-20, wherein said adjustment means is configured to, in the case of multiple portions moving in different directions in the view, to determine a main portion for scan direction adjustment based on at least one of the following: estimated size, velocity, position, or sensor distance of the portions.

22. The electronic device of any of claims 12-21 that is a mobile terminal, a PDA (Personal Digital Assistant), or a digital camera.

23. A computer executable program comprising code means (712) adapted, when the program is run on a computer device, to carry out the method steps as defined by any of claims 1-11.

24. A carrier medium having a computer executable program recorded thereon as defined by claim 23.

25. The carrier medium of claim 24 that is a memory card, a magnetic disk, or a cd-rom.

## Patentansprüche

1. Verfahren zum Verringern von bewegungsinduzierter Verzerrung in einem digitalen Bild, das die folgenden Schritte umfasst: Erhalten des Bilds durch einen Kameramechanismus, der einen Sensor mit einem Verschluss des Rolltyps enthält, der Abtastzeilen fortlaufend zu verschiedenen Zeitpunkten (608, 610) belichtet, und Detektieren einer Bewegung zumindest eines Teils in dem Bild in dem Sichtfeld des Sensors (604), **dadurch gekennzeichnet, dass** es außerdem den folgenden vorbereitenden Schritt umfasst:
- Anpassen der Abtastrichtung der Abtastzeilen des Sensors in Bezug auf den Rest des Kameramechanismus anhand der detektierten Bewegung (606), wobei immer dann, wenn die detektierte Bewegung horizontal in dem Sichtfeld erfolgt, auch die ausgewählte Abtastrichtung horizontal ist; während in dem Fall, in dem die Bewegung vertikal erfolgt, die ausgewählte Abtastrichtung vertikal ist.

2. Verfahren nach Anspruch 1, wobei die interne Abtastrichtung des Sensors konfigurierbar ist.

3. Verfahren nach Anspruch 1 oder 2, wobei die Abtastrichtung des Sensors in Bezug auf den Kameramechanismus durch Drehen des Sensors angepasst wird.

4. Verfahren nach einem der Ansprüche 1-3, wobei die Bewegung mittels Bewegungsschätzung aus digitalen Bilddaten detektiert wird.

5. Verfahren nach einem der Ansprüche 1-4, wobei die Bewegung über einen Bewegungssensor detektiert wird, der mindestens eines der Folgenden überwacht: Bewegungen des Kameramechanismus, Bewegungen der Vorrichtung, die den Kameramechanismus beherbergt, oder Bewegungen des Objekts, das in dem Sichtfeld des Sensors zu sehen ist.

6. Verfahren nach einem der Ansprüche 1-5, wobei die Abtastrichtung aus mindestens zwei Optionen auswählbar ist, wobei die Optionen mindestens eine vertikale und eine horizontale Abtastrichtung enthalten.

7. Verfahren nach einem der Ansprüche 1-6, wobei die Abtastrichtung eine der folgenden ist: von links nach rechts, von rechts nach links, von oben nach unten oder von unten nach oben.

8. Verfahren nach einem der Ansprüche 1-7, wobei eine Hauptachse, die entweder eine vertikale oder eine horizontale Achse ist, für die Bewegung in Bezug auf den Sensor des Kameramechanismus bestimmt wird, um die Abtastrichtung parallel zu der Hauptachse anzupassen, wobei die Hauptachse vorzugsweise die größte Geschwindigkeitskomponente der Bewegung enthält.

9. Verfahren nach einem der Ansprüche 1-8, wobei in dem Fall, in dem sich mehrere Teile in dem Sichtfeld in verschiedene Richtungen bewegen, ein Hauptteil für die Abtastrichtungsanpassung anhand eines der Folgenden bestimmt wird: geschätzte Größe, Geschwindigkeit, Position oder Sensorabstand der Teile.

10. Verfahren nach Anspruch 5, wobei der Bewegungssensor mindestens eines der Folgenden enthält: einen Beschleunigungsmesser, einen drahtlosen Sensor für das Verfolgen von externen Objekten, ein Gyroskop oder ein Manometer.

11. Verfahren nach einem vorhergehenden Anspruch, wobei das Bild einen Rahmen eines Videosignals repräsentiert.

12. Elektronische Vorrichtung zum Erhalten eines digitalen Bilds, wobei die Vorrichtung einen Körper und einen Kameramechanismus (714), der stabil an dem Körper befestigt ist, umfasst, wobei der Kameramechanismus (714) einen Sensor mit einem Verschluss des Rolltyps enthält, der konfiguriert ist, die Abtastzeilen fortlaufend zu verschiedenen Zeitpunkten zu belichten, und Detektionsmittel zum Erkennen einer Bewegung zumindest eines Teils in dem Bild in dem Sichtfeld des Sensors (712, 714, 716), **dadurch gekennzeichnet, dass** sie ferner Folgendes umfasst:
- Anpassungsmittel zum Auswählen der Abtastrichtung der Abtastzeilen des Sensors in Bezug auf den Körper der elektronischen Vorrichtung anhand der Bewegung (702, 712, 714), wobei die Anpassungsmittel konfiguriert sind, immer dann, wenn die detektierte Bewegung horizontal in dem Sichtfeld erfolgt, die Abtastrichtung als horizontal auszuwählen; während in dem Fall, in dem die Bewegung vertikal erfolgt, die ausgewählte Abtastrichtung vertikal ist.

13. Elektronische Vorrichtung nach Anspruch 12, wobei die interne Abtastrichtung des Sensor konfigurierbar ist.

14. Elektronische Vorrichtung nach Anspruch 12 oder 13, wobei der Sensor in Bezug auf den Körper drehbar ist, um die relative Abtastrichtung anzupassen.

15. Elektronische Vorrichtung nach einem der Ansprüche 12-14, wobei der Sensor sowohl vertikale als auch horizontale Abtastrichtungen unterstützt.

16. Elektronische Vorrichtung nach einem der Ansprüche 12-15, wobei die Detektionsmittel konfiguriert sind, digitale Bilddaten für Bewegungsschätzungszwecke zu analysieren.

17. Elektronische Vorrichtung nach einem der Ansprüche 12-16, wobei die Detektionsmittel einen Bewegungssensor (716) umfassen.

18. Elektronische Vorrichtung nach Anspruch 17, wobei der Bewegungssensor (716) mindestens eines der Folgenden umfasst: einen Beschleunigungsmesser, einen drahtlosen Sensor für das Verfolgen von externen Objekten, ein Gyroskop oder ein Manometer.

19. Elektronische Vorrichtung nach einem der Ansprüche 12-18, wobei die Abtastrichtung eine der Folgenden ist:
von links nach rechts, von rechts nach links, von oben nach unten oder von unten nach oben.

20. Elektronische Vorrichtung nach einem der Ansprüche 12-19, wobei die Anpassungsmittel konfiguriert sind, eine Hauptachse für die Bewegung in Beziehung auf den Sensor des Kameramechanismus zu bestimmen, die entweder eine vertikale oder eine horizontale Achse ist, um die Abtastrichtung parallel zu der Hauptachse anzupassen, wobei die Hauptachse vorzugsweise die höchste Größengeschwindigkeitskomponente der Bewegung enthält.

21. Elektronische Vorrichtung nach einem der Ansprüche 12-20, wobei die Anpassungsmittel konfiguriert sind, in dem Fall, in dem sich mehrere Teile in dem Sichtfeld in verschiedene Richtungen bewegen, einen Hauptteil für die Abtastrichtungsanpassung anhand eines der folgenden zu bestimmen: geschätzte Größe, Geschwindigkeit, Position oder Sensorabstand der Teile.

22. Elektronische Vorrichtung nach einem der Ansprüche 12-21, die ein mobiler Anschluss, ein PDA (Persönlicher Digitaler Assistent) oder eine Digitalkamera ist.

23. Computerausführbares Programm, das Codemittel (712) umfasst, die ausgelegt sind, dann, wenn das Programm auf einer Computervorrichtung läuft, die Verfahrensschritte nach einem der Ansprüche 1-11 auszuführen.

24. Trägermedium mit einem darauf aufgezeichneten computerausführbarem Programm nach Anspruch 23.

25. Trägermedium nach Anspruch 24, das eine Speicherkarte, eine Magnetplatte oder eine CD-ROM ist.

## Revendications

1. Procédé pour réduire une distorsion de mouvement dans une image numérique comprenant les étapes comprenant d'obtenir l'image par un mécanisme de caméra incorporé dans un capteur avec un obturateur à volet roulant exposant en séquence les lignes de balayage à différents instants (608, 610), et de détecter le mouvement d'au moins une partie dans l'image dans le champ de vision du capteur (604), **caractérisé en ce qu'**il comprend en outre l'étape préparatoire suivants :
ajuster la direction de balayage desdites lignes de balayage du capteur en relation avec le reste du mécanisme de la caméra sur la base du mouvement détecté (606), où, à chaque fois que le mouvement détecté se produit horizontalement dans le champ de vision, la direction de balayage sélectionnée est également horizontale ; tandis que lorsque le mouvement se produit verticalement, la direction de balayage sélectionnée est verticale.

2. Procédé selon la revendication 1, dans lequel la direction de balayage interne du capteur est configurable.

3. Procédé selon la revendication 1 ou la revendication 2, dans lequel la direction de balayage du capteur en relation avec le mécanisme de la caméra est ajustée en faisant tourner le capteur.

4. Procédé selon l'une quelconque des revendications 1 à 3, dans lequel ledit mouvement est détecté par l'intermédiaire d'une estimation du mouvement des données d'image numérique.

5. Procédé selon l'une quelconque des revendications 1 à 4, dans lequel ledit mouvement est détecté par l'intermédiaire d'un capteur de mouvement surveillant au moins un mouvement parmi les suivants : les mouvements du mécanisme de la caméra, les mouvements du dispositif hébergeant le mécanisme de la caméra, ou les mouvements d'objets se présentant dans le champ de vision du capteur.

6. Procédé selon l'une quelconque des revendications 1 à 5, dans lequel la direction de balayage est sélectionnable parmi au moins deux options, lesdites options comprenant au moins une direction de balayage verticale et une direction de balayage horizontale.

7. Procédé selon l'une quelconque des revendications 1 à 6, dans lequel ladite direction de balayage est l'une des suivantes : de gauche à droite, de droite à gauche, de haut en bas ou de bas en haut.

8. Procédé selon l'une quelconque des revendications 1 à 7, dans lequel un axe principal, étant soit un axe vertical, soit un axe horizontal, est déterminé pour le mouvement relativement audit capteur du mécanisme de la caméra de manière à ajuster ladite direction de balayage parallèlement audit axe principal, ledit axe principal comprenant de préférence la composante de vitesse la plus importante du mouvement.

9. Procédé selon l'une quelconque des revendications 1 à 8, dans lequel, dans le cas de plusieurs parties se déplaçant dans différentes directions dans le champ de vision, une partie principale est déterminée pour l'ajustement de la direction de balayage sur la base d'au moins un des éléments suivants : la taille estimée, la vitesse, la position ou la distance des parties par rapport au capteur.

10. Procédé selon la revendication 5, dans lequel ledit capteur de mouvement comprend au moins un des éléments suivants : un accéléromètre, un capteur sans fil pour le suivi d'objets externes, un gyroscope ou un manomètre.

11. Procédé selon l'une quelconque des revendications précédentes, dans lequel ladite image représente une trame d'un signal vidéo.

12. Dispositif électronique destiné à obtenir une image numérique, ledit dispositif comprenant un corps et un mécanisme de caméra (714) fixé de manière stable au corps, ledit mécanisme de caméra (714) incorporant un capteur avec un obturateur à volet roulant configuré pour exposer en séquence les lignes de balayage à différents instants, et des moyens de détection pour reconnaître le mouvement d'au moins une partie dans l'image dans le champ de vision du capteur (712, 714, 716), **caractérisé en ce qu'**il comprend en outre :
un moyen d'ajustement pour sélectionner la direction de balayage desdites lignes de balayage du capteur en relation avec le corps du dispositif électronique sur la base du mouvement (702, 712, 714), où ledit moyen d'ajustement est configuré pour, à chaque fois que le mouvement détecté se produit horizontalement dans le champ de vision, sélectionner la direction de balayage horizontale ; tandis que dans le cas où le mouvement se produit verticalement, la direction de balayage sélectionnée est verticale.

13. Dispositif électronique selon la revendication 12, dans lequel la direction de balayage interne du capteur est configurable.

14. Dispositif électronique selon la revendication 12 ou la revendication 13, dans lequel ledit capteur est rotatif par rapport au corps de manière à ajuster la direction de balayage relative.

15. Dispositif électronique selon l'une quelconque des revendications 12 à 14, dans lequel ledit capteur supporte à la fois des directions de balayage verticales et horizontales.

16. Dispositif électronique selon l'une quelconque des revendications 12 à 15, dans lequel ledit moyen de détection est configuré pour analyser des données d'image numérique à des fins d'estimation de mouvement.

17. Dispositif électronique selon l'une quelconque des revendications 12 à 16, dans lequel ledit moyen de détection comprend un détecteur de mouvement (716).

18. Dispositif électronique selon la revendication 17, dans lequel ledit capteur de mouvement (716) comprend au moins un des éléments suivants : un accéléromètre, un capteur sans fil pour le suivi d'objets externes, un gyroscope ou un manomètre.

19. Dispositif électronique selon l'une quelconque des revendications 12 à 18, dans lequel la direction de balayage est l'une des suivantes : de gauche à droite, de droite à gauche, de haut en bas ou de bas en haut.

20. Dispositif électronique selon l'une quelconque des revendications 12 à 19, dans lequel ledit moyen d'ajustement est configuré pour déterminer un axe principal, étant soit un axe vertical, soit un axe horizontal, pour le mouvement relativement au capteur du mécanisme de la caméra de manière à ajuster ladite direction de balayage parallèlement audit axe principal, ledit axe principal comprenant de préférence la composante de vitesse la plus importante du mouvement.

21. Dispositif électronique selon l'une quelconque des revendications 12 à 20, dans lequel, ledit moyen d'ajustement est configuré pour, dans le cas de plusieurs parties se déplaçant dans différentes directions dans le champ de vision, déterminer une partie principale pour l'ajustement de la direction de balayage sur la base d'au moins un des éléments suivants : la taille estimée, la vitesse, la position ou la distance des parties par rapport au capteur.

22. Dispositif électronique selon l'une quelconque des revendications 12 à 21, étant un terminal mobile, un assistant numérique personnel (PDA) ou un appareil photo numérique.

23. Programme exécutable par un ordinateur comprenant un moyen de code (712) conçu, lorsque le programme est exécuté sur un dispositif informatique, pour exécuter les étapes du procédé, tel que défini par l'une quelconque des revendications 1 à 11.

24. Support sur lequel est enregistré le programme exécutable par un ordinateur, tel que défini par la revendication 23.

25. Support de la revendication 24, qui est une carte mémoire, un disque magnétique ou un CD-ROM.
